# FASCICULE DE BREVET EUROPEEN

(11) **EP 1 610 045 B1**
(45) Date de publication et mention de la délivrance du brevet: **25.07.2007**
(21) Numéro de dépôt: 05291256.5
(22) Date de dépôt: 10.06.2005
(51) Int. Cl.: F16K 31/06, H01F 7/16

(54) **Electrovanne, en particulier pour être installée sur un reservoir de liquide sous pression de gaz**
Magnetventil zur Installation auf einem unter Gasdruck stehenden Flüssigkeitsbehälter
Electromagnetic valve, to be installed in particular on a tank of liquid under gas pressure

(30) Priorité: 23.06.2004 FR 0406833
(43) Date de publication de la demande: 28.12.2005
(73) Titulaire: Asco Joucomatic, 92500 Rueil Malmaison (FR)
(72) Inventeur: Guyon, Christine, 28300 Oisème (FR); Blondy, François, 28170 Blevy (FR); Longpre, Gonzague, 28110 Lucé (FR); Varret, Jean-Pierre, 28630 Berchères-les-Pierres (FR)
(74) Mandataire: Michardière, Bernard

(56) Documents cités:
- EP-A- 0 050 756
- GB-A- 1 077 169
- US-A- 4 336 896
- US-B1- 6 422 258
- US-B1- 6 684 901

## Description

L'invention est relative à une électrovanne qui comprend une première partie de corps munie d'une bobine électromagnétique coaxiale, un porte-clapet muni d'un clapet monté sur un noyau propre à se déplacer sous l'action du champ magnétique créé par la bobine, et une deuxième partie de corps dans laquelle est prévu un siège de clapet et, pour la fermeture des lignes du champ magnétique de la bobine, un étrier en forme de U ayant une base parallèle à l'axe géométrique de la bobine et des branches sensiblement orthogonales qui encadrent la bobine, l'étrier étant constitué d'au moins deux pièces démontables comportant respectivement sur leurs bords adjacents des moyens de raccordement prévus pour favoriser le passage des lignes du champ magnétique.

Le document EP-A-0050756 est considéré comme étant l'état de la technique le plus proche de l'objet de l'invention.

L'invention concerne plus particulièrement une telle électrovanne destinée à être montée sur un réservoir de liquide sous pression de gaz, par exemple pour assurer la diffusion d'un parfum dans l'atmosphère.

L'invention a pour but, surtout, de fournir une électrovanne de dimensions réduites dont le montage et la fabrication sont simplifiés, notamment en ce qui concerne l'étrier.

Selon l'invention, une électrovanne du genre défini précédemment est caractérisée en ce que la première partie de corps comporte une tête d'extrémité de plus fort diamètre solidaire d'un manchon de plus petit diamètre autour duquel est montée la bobine, l'alésage du manchon étant prolongé par un trou borgne axial prévu dans la tête, laquelle comporte une fente radiale traversée par le trou borgne et débouchant à l'extérieur pour recevoir une branche de l'étrier, laquelle branche comporte un trou qui s'aligne avec le trou borgne de la tête.

Les moyens de raccordement peuvent comprendre sur le bord d'une pièce de l'étrier une crénelure et sur le bord adjacent de l'autre pièce une crénelure conjuguée, les crénelures étant propres à s'imbriquer étroitement l'une dans l'autre lors de l'assemblage des deux pièces.

De préférence l'une des pièces démontables de l'étrier est constituée par une branche du U orthogonale à la base de l'étrier, les crénelures des deux bords adjacents étant situées dans des plans orthogonaux. L'autre pièce démontable de l'étrier peut être d'un seul tenant en angle droit. Les dents des crénelures peuvent être rectangulaires.

De préférence une culasse engagée dans l'alésage du manchon est prévue pour traverser le trou de la branche de l'étrier et assurer le verrouillage de cette branche dans la partie de corps. Avantageusement, la branche de l'étrier traversée par la culasse est solidaire de la base.

L'extrémité de la première partie de corps opposée à la tête comporte avantageusement une collerette ayant un diamètre supérieur à celui du manchon, lequel se prolonge axialement au-delà de la collerette, et la bobine est enroulée autour du manchon entre la tête et la collerette.

Les deux parties de corps peuvent être réalisées en matière plastique moulée.

L'autre branche démontable de l'étrier comporte également un trou dans lequel est engagée l'extrémité du manchon au-delà de la collerette, ce trou étant limité par un rebord cylindrique engagé dans une gorge circulaire de la collerette.

De préférence, les extrémités de la première et de la deuxième parties de corps tournées l'une vers l'autre comportent des moyens d'encliquetage pour les maintenir assemblées.

Ces moyens d'encliquetage peuvent comprendre, du côté de la première partie de corps, deux oreilles diamétralement opposées munies respectivement d'une ouverture et, du côté de la deuxième partie de corps, des bossages conjugués propres à s'encliqueter dans les ouvertures des oreilles.

L'invention consiste, mises à part les dispositions exposées ci-dessus, en un certain nombre d'autres dispositions dont il sera plus explicitement question ci-après à propos d'un exemple de réalisation décrit en détail avec référence aux dessins annexés, mais qui n'est nullement limitatif. Sur ces dessins :
Fig.1 est une vue en élévation d'une électrovanne selon l'invention.
Fig.2 est une coupe suivant la ligne II-II de Fig.1, avec représentation symbolique de l'extrémité d'un réservoir de liquide sous pression de gaz.
Fig.3 est une coupe suivant la ligne III-III de Fig.2.
Fig.4 est une vue en perspective éclatée de l'électrovanne sans la bobine électromagnétique, et
Fig.5 est une vue en perspective d'une variante de buse de diffuseur.

En se reportant aux dessins, on peut voir une électrovanne 1 comprenant une première partie de corps C1 et une deuxième partie de corps C2, avantageusement réalisées en matière plastique moulée. Les deux parties assemblées admettent un axe géométrique commun X-X.

L'électrovanne est de préférence du type 2/2 c'est-à-dire à deux voies ou deux orifices et à deux positions. Généralement cette électrovanne est en position fermée au repos, c'est-à-dire lorsque la bobine électromagnétique n'est pas alimentée.

La première partie C1 comporte une tête d'extrémité 2 de plus fort diamètre solidaire d'un manchon 3 de plus petit diamètre. L'extrémité de la première partie C1 opposée à la tête 2 comporte une collerette 4 ayant un diamètre supérieur à celui du manchon, lequel se prolonge par une partie 3a au-delà de la collerette 4 à l'opposé de la tête 2.

La première partie de corps C1 est munie d'une bobine électromagnétique 5 coaxiale qui a été enroulée directement autour du manchon 3 dans un espace annulaire délimité radialement vers l'intérieur par le manchon 3 et, axialement, par la collerette 4 et la tête 2. De préférence la collerette 4 a le même diamètre extérieur que la tête 2 et la bobine 5 a un diamètre extérieur légèrement inférieur.

L'opération d'embobinage direct de la bobine 5 sur le manchon 3 est moins coûteuse que l'opération consistant à enfiler sur un manchon une bobine préétablie. En outre, le bobinage direct sur le manchon permet de réaliser en une seule pièce la collerette 4, le manchon 3 et la tête 2.

La collerette 4 comporte du côté opposé à la tête 2 une gorge circulaire 6.

Un clapet 7 est monté sur un porte-clapet 8 comportant un fût cylindrique coaxial au corps C1, et monté solidaire dans un noyau 9. Ce noyau 9 est constitué par une pièce cylindrique coulissant dans le manchon 3 et comportant un alésage axial 10 dans lequel peut coulisser un ressort 12. Le porte-clapet comporte une tête 8a de plus fort diamètre située à l'extérieur de l'alésage 10 et dans laquelle est logé le clapet 7.

Une fente radiale longitudinale 11 est prévue dans le porte-clapet 8, cette fente se prolongeant dans la tête 8a et débouchant à chaque extrémité longitudinale.

Un ressort hélicoïdal de compression 12 est en appui à une extrémité contre le porte-clapet 8 et, à son autre extrémité, contre une culasse 13 engagée dans un trou borgne 14 de la tête 2, qui prolonge le logement intérieur du manchon 3. La culasse est ancrée dans la tête 2 par des nervures circulaires 13a (Fig.4). Un canal axial 15 traverse entièrement la culasse 13 et communique à une extrémité avec l'alésage 10 et à l'autre extrémité avec le fond du trou borgne 14.

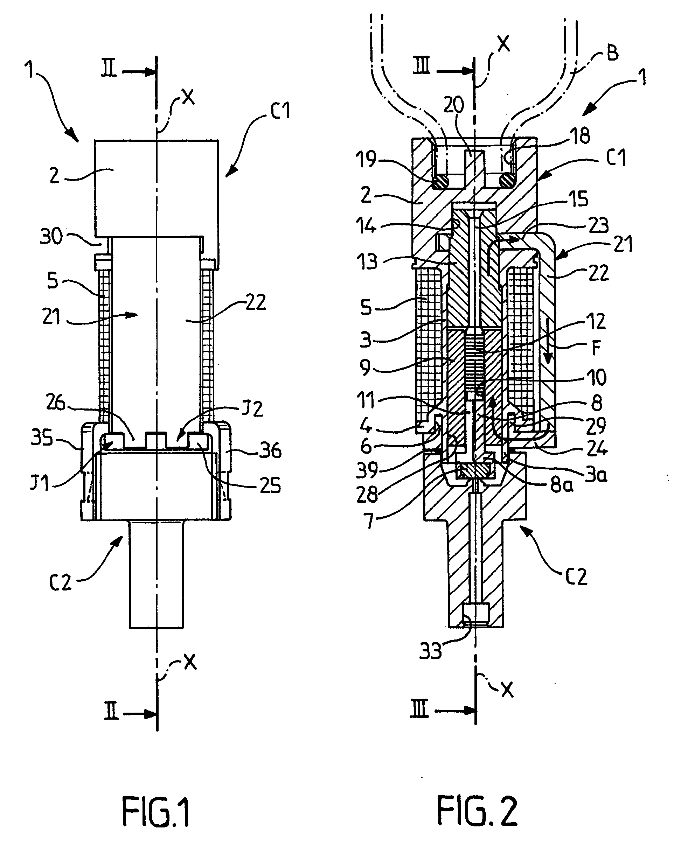

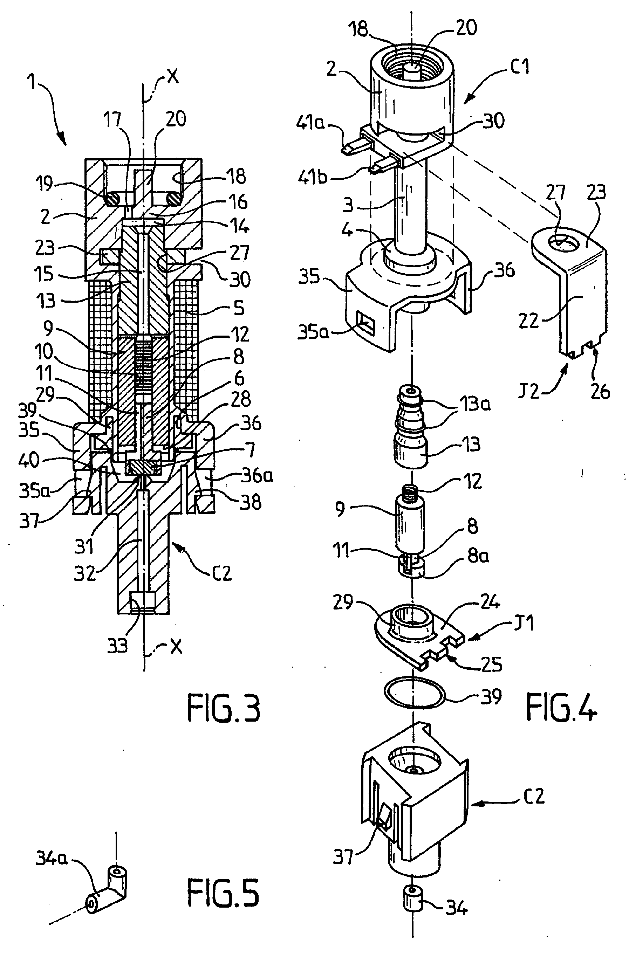

Comme visible sur Fig.3, la paroi 16 de fond du trou 14 est traversée par un passage 17 décalé radialement et faisant communiquer le trou 14 avec un trou taraudé 18. Dans le trou 18 peut se visser le col fileté d'un réservoir B (Fig.2) contenant, par exemple, un parfum liquide sous une pression de gaz pouvant atteindre une dizaine de bars. Le fond du trou 18 est muni d'un joint torique 19. Le passage 17 est situé radialement à l'intérieur du contour du joint 19. La paroi 16 comporte en outre un ergot axial 20 en saillie dans le trou 18. L'ergot 20 constitue un percuteur propre à crever un opercule de fermeture prévu dans le col du réservoir B.

Le noyau 9 et la culasse 13 sont en un matériau magnétique, notamment en acier.

Un étrier 21, également en matériau magnétique, assure la fermeture des lignes du champ magnétique de la bobine 5 schématiquement représentées par des flèches F (Fig.2), et fait partie du circuit magnétique de cette bobine.

L'étrier 21 a sensiblement la forme d'un U ayant une base 22 parallèle à l'axe géométrique de la bobine 5 et des branches 23, 24 sensiblement orthogonales à la base 22. Les branches 23, 24 encadrent la bobine 5.

L'étrier 21 est constitué de deux pièces démontables constituées respectivement par la branche 24 située du côté du clapet et par l'ensemble de la base 22 et de l'autre branche 23 qui forment une pièce d'un seul tenant en angle droit.

Les deux pièces démontables 24 et 22-23 comportent sur leurs bords adjacents des moyens de raccordement J1, J2 prévus pour favoriser le passage des lignes F du champ magnétique.

Les moyens de raccordement J1 comprennent sur le bord de la branche 24 une crénelure 25 et sur le bord adjacent de la pièce 22 une crénelure conjuguée 26. Les dents des crénelures 25, 26 sont rectangulaires et sont situées dans des plans orthogonaux lorsque les deux pièces de l'étrier sont assemblées. Bien que la solution décrite pour la réalisation de l'étrier en deux pièces soit préférée, on pourrait prévoir une réalisation en plus de deux pièces par exemple avec les deux branches 23 et 24 démontables et avec des moyens de raccordement appropriés à la jonction de chaque branche avec la base 22.

La branche 23 comporte un trou 27 prévu pour être traversé par la culasse 13. La branche 24 comporte un trou 28 muni d'un rebord cylindrique 29 tourné vers l'autre branche 23. Le trou 28 est prévu pour être traversé par le prolongement 3a du manchon 3, tandis que le rebord 29 est prévu pour s'engager dans la gorge circulaire 6.

La tête 2 de la première partie de corps C1 comporte une fente radiale 30 traversée par le trou borgne 14 et débouchant à l'extérieur pour recevoir la branche 23 de l'étrier dont le trou 27 s'aligne avec le trou borgne 14. Le verrouillage de la branche 23 dans la tête 2 est assuré par la culasse 13 lorsqu'elle est engagée dans le manchon 3 et le trou borgne 14 en traversant le trou 27.

La deuxième partie C2 de corps comporte un siège 31 pour le clapet et un canal axial 32 débouchant à une extrémité face au clapet et, à l'autre extrémité, dans un logement cylindrique 33 propre à recevoir une buse d'injection 34 (Fig.4).

Les extrémités de la première et de la deuxième parties C1, C2 de corps tournées l'une vers l'autre comportent des moyens d'encliquetage pour leur assemblage.

Ces moyens d'encliquetage comprennent par exemple, du côté du corps C1, deux oreilles 35, 36 diamétralement opposées en saillie longitudinale présentant une élasticité dans le sens radial, chaque oreille comportant une ouverture 35a, 36a.

Du côté du corps C2, les moyens d'encliquetage comprennent des bossages 37, 38 conjugués des ouvertures 35a, 36a. Les bossages 37, 38 sont prévus sur la surface extérieure de lames, solidaires du corps C2, présentant une élasticité radiale. Un joint torique 39 assure l'étanchéité entre les corps C1 et C2 assemblés. La face d'extrémité du corps C2 tournée vers C1 présente une cavité 40 entourant le siège 31.

Comme visible sur Fig.4, deux broches 41a, 41b sont insérées dans la tête 2 et font saillie à l'extérieur. Ces broches sont prévues pour le raccordement électrique aux fils de la bobine 5.

Fig.5 montre une variante de réalisation 34a d'une buse d'injection en équerre dont un côté peut être engagé dans le logement 33.

Ceci étant, le montage de l'électrovanne selon l'invention est le suivant.

On embobine directement sur le manchon 3 du corps C1 en matière plastique la bobine électromagnétique 5 dont les fils sont raccordés aux broches 41a, 41b.

On engage ensuite la branche 23 de la partie 22-23 de l'étrier dans la fente 30 de manière à aligner le trou 27 avec le trou borgne 14.

On engage la culasse 13 dans le manchon 3 et on l'enfonce jusqu'à ce qu'elle occupe la position illustrée sur Fig.2 et 3 où elle traverse le trou 27. Le verrouillage de la partie 23-22 dans le corps C1 est assuré par la culasse 13 ancrée dans la tête 2.

Le noyau 9 est ensuite engagé dans le manchon 3 en butée contre l'extrémité de la culasse 13.

Le ressort 12 est mis en place dans l'alésage 10 du noyau 9, en butée contre l'extrémité de la culasse 13.

Le porte-clapet 8 muni du clapet 7 est ensuite emmanché et positionné dans l'alésage 10 du noyau 9.

La branche 24 de l'étrier est installée autour de l'extrémité du manchon 3 avec engagement du rebord 29 dans la gorge 6 et interpénétration des crénelures 25 et 26 pour compléter l'étrier 21.

La deuxième partie de corps C2 est ensuite assemblée par encliquetage dans les oreilles 36 avec interposition du joint d'étanchéité 39.

Le fonctionnement de l'électrovanne résulte des explications qui précèdent.

Lorsque la bobine n'est pas alimentée, le ressort 12 repousse le porte-clapet 8 et applique le clapet 7 de manière étanche contre le siège 31.

Lorsque la bobine 5 est alimentée, le noyau 9 muni du porte-clapet 8 est soulevé de sorte que le clapet 7 est écarté du siège 31. Le fluide peut alors s'écouler depuis le réservoir B par le passage 17 (Fig.3), l'alésage 15 de la culasse 13, l'alésage 10 du noyau 9, la fente 11, la cavité 40 et le canal 32 vers la buse d'injection 34 ou 34a.

L'imbrication étroite de crénelures 25 et 26 n'oppose qu'une très faible réluctance au passage des lignes de champ magnétique.

L'épaisseur de matière plastique du manchon 3 traversée par les lignes de flux dans la zone radiale comprise entre la branche 24 et le noyau 9 est réduite, de l'ordre de 0.6 mm, et n'augmente que faiblement la réluctance. Le circuit magnétique est donc réalisé dans des conditions optimales.

L'électrovanne conforme à l'invention peut être de dimensions particulièrement réduites notamment en ce qui concerne son diamètre extérieur, tout en exerçant un effort suffisant pour la commande du clapet

## Revendications

1. Electrovanne comprenant une première partie (C1) de corps munie d'une bobine électromagnétique (5) coaxiale, un porte-clapet (8) muni d'un clapet (7) monté sur un noyau (9) propre à se déplacer sous l'action du champ magnétique créé par la bobine, et une deuxième partie de corps (C2) dans laquelle est prévu un siège de clapet (31) et, pour la fermeture des lignes du champ magnétique de la bobine, un étrier (21) en forme de U ayant une base (22) parallèle à l'axe géométrique de la bobine et des branches (23,24) sensiblement orthogonales qui encadrent la bobine (5), l'étrier (21) étant constitué d'au moins deux pièces démontables (22,24) qui comportent respectivement sur leurs bords adjacents des moyens de raccordement (J1, J2) prévus pour favoriser le passage des lignes du champ magnétique,
**caractérisée en ce que** la première partie de corps (C1) comporte une tête d'extrémité (2) de plus fort diamètre solidaire d'un manchon (3) de plus petit diamètre autour duquel est montée la bobine (5), l'alésage du manchon étant prolongé par un trou borgne axial (14) prévu dans la tête, laquelle comporte une fente radiale (30) traversée par le trou borgne (14) et débouchant à l'extérieur pour recevoir une branche (23) de l'étrier (21), laquelle branche (23) comporte un trou (27) qui s'aligne avec le trou borgne de la tête (14).

2. Electrovanne selon la revendication 1, **caractérisée en ce qu**'une culasse (13) est engagée dans l'alésage du manchon (3) et traverse le trou (27) de la branche (23) de l'étrier pour assurer le verrouillage de cette branche dans la partie de corps (C1).

3. Electrovanne selon la revendication 1 ou 2, **caractérisée en ce que** la branche (23) de l'étrier (21) traversée par la culasse (13) est solidaire de la base (22).

4. Electrovanne selon la revendication 1, **caractérisée en ce que** l'extrémité de la première partie de corps (C1) opposée à la tête (2) comporte une collerette (4) ayant un diamètre supérieur à celui du manchon (3) et la bobine (5) est enroulée autour du manchon (3) entre la tête (2) et la collerette (4).

5. Electrovanne selon l'une des revendications précédentes, **caractérisée en ce que** les deux parties de corps (C1, C2) sont réalisées en matière plastique moulée.

6. Electrovanne selon la revendication 4, **caractérisée en ce que** l'autre branche démontable (22-23) de l'étrier comporte un trou (27) dans lequel est engagée l'extrémité d'un prolongement (3a) du manchon, ce trou étant limité par un rebord cylindrique (29) engagé dans une gorge circulaire (6) de la collerette.

7. Electrovanne selon l'une des revendications précédentes, **caractérisée en ce que** les extrémités de la première et de la deuxième parties (C1, C2) de corps tournées l'une vers l'autre comportent des moyens d'encliquetage (35, 36 ; 37, 38) pour les maintenir assemblées.

8. Electrovanne selon l'une quelconque des revendications précédentes, **caractérisée en ce que** les moyens de raccordement (J1, J2) comprennent sur le bord d'une pièce (24) de l'étrier une crénelure (25) et sur le bord adjacent de l'autre pièce (22) une crénelure conjuguée (26), les crénelures étant propres à s'imbriquer étroitement l'une dans l'autre lors de l'assemblage des deux pièces.

9. Electrovanne selon l'une quelconque des revendications précédentes, **caractérisée en ce que** l'une des pièces démontables de l'étrier (21) est constituée par une branche (24) du U orthogonale à la base (22) de l'étrier, les crénelures (25, 26) des deux bords adjacents étant situées dans des plans orthogonaux.

10. Electrovanne selon la revendication 9, **caractérisée en ce que** l'autre pièce démontable (22-23) de l'étrier est d'un seul tenant, en angle droit.

11. Electrovanne selon la revendication 8, **caractérisée en ce que** les dents des crénelures (25, 26) sont rectangulaires.

## Claims

1. Solenoid valve comprising of a first body part (C1) provided with a coaxial electromagnetic coil (5), a shutter holder (8) provided with a shutter (7) mounted on a core (9) able to move under the action of the magnetic field created by the coil, and a second body part (C2) in which there is provided a shutter seat (31) and, for the closure of the lines of the magnetic field of the core, a U-shaped stirrup (21) having a base (22) parallel to the geometric axis of the coil and substantially orthogonal arms (23, 24) that frame the coil (5), the stirrup (21) consisting of at least two detachable pieces (22, 24) that have respectively on their adjacent edges connection means (J1, J2) provided for promoting the passage of the lines of the magnetic field,
**characterised in that** the first body part (C1) comprises an end head (2) with a greater diameter fixed to a sleeve (3) with a smaller diameter around which the coil (5) is mounted, the bore of the sleeve being extended by an axial blind hole (14) provided in the head, which comprises a radial slot (30) through which the blind hole (14) passes and opening to the outside in order to receive an arm (23) of the stirrup (21), the said arm (23) comprising a hole (27) that is aligned with the blind hole in the head (14).

2. Solenoid valve according to claim 1, **characterised in that** a casing (13) is engaged in the bore of the sleeve (3) and passes through the hole (27) in the arm (23) of the stirrup in order to ensure the locking of this arm in the body part (C1).

3. Solenoid valve according to claim 1 or 2, **characterised in that** the arm (23) of the stirrup (21) through which the casing (13) passes is fixed to the base (22).

4. Solenoid valve according to claim 1, **characterised in that** the end of the first body part (C1) opposite to the head (2) comprises a collar (4) having a diameter greater than that of the sleeve (3) and the coil (5) is wound around the sleeve (3) between the head (2) and the collar (4).

5. Solenoid valve according to one of the preceding claims, **characterised in that** the two body parts (C1, C2) are produced from moulded plastics material.

6. Solenoid valve according to claim 4, **characterised in that** the other detachable arm (22-23) of the stirrup has a hole (27) in which the end of an extension (3a) of the sleeve engages, this hole being delimited by a cylindrical rim (29) engaged in a circular groove (6) in the collar.

7. Solenoid valve according to one of the preceding claims, **characterised in that** the ends of the first and second body parts (C1, C2) turned towards each other comprise snapping-in means (35, 36; 37; 38) in order to keep them assembled.

8. Solenoid valve according any to one of the preceding claims, **characterised in that** the connection means (J1, J2), comprise a serration (25) on the edge of a piece (24) of the stirrup and a conjugate serration (26) on the adjacent edge of the other piece (22), the serrations being able to interleave closely in each other when the two pieces are assembled.

9. Solenoid valve according to any one of the preceding claims, **characterised in that** one of the detachable pieces of the stirrup (21) is formed by an arm (24) of the U orthogonal to the base (22) of the stirrup, the serrations (25, 26) on the two adjacent edges being situated in orthogonal planes.

10. Solenoid valve according to claim 9, **characterised in that** the other detachable piece (22-23) of the stirrup is in a single piece in a right angle.

11. Solenoid valve according to claim 8, **characterised in that** the teeth of the serrations (25, 26) are , rectangular.

## Patentansprüche

1. Magnetventil mit einem ersten Körperteil (C1), das mit einer koaxialen elektromagnetischen Spule (5) versehen ist, einem Ventilelementträger (8), der mit einem Ventilelement (7) versehen und an einem Kern (9) angebracht ist, welcher unter Einwirkung des von der Spule erzeugten Magnetfelds bewegbar ist, und mit einem zweiten Körperteil (C2), in welchem ein Ventilsitz (31) vorgesehen ist, und einem zum Schließen der Linien des Magnetfelds der Spule vorgesehenen U-förmigen Bügel (21) mit einer zur geometrischen Achse der Spule parallelen Basis (22) und im wesentlichen orthogonalen Schenkeln (23, 24), welche die Spule (5) umgreifen, wobei der Bügel (21) aus mindestens zwei demontierbaren Teilen (22, 24) gebildet ist, welche jeweils an ihren einander benachbarten Rändern Verbindungseinrichtungen (J1, J2) aufweisen, welche zum Begünstigen des Durchgangs der Magnetfeldlinien vorgesehen sind,
**dadurch gekennzeichnet, dass** das erste Körperteil (C1) einen Endkopf (2) mit größerem Durchmesser aufweist, der fest mit einer Hülse (3) von geringerem Durchmesser verbunden ist, um welche die Spule (5) angebracht ist, wobei die Bohrung der Hülse durch ein axiales Blindloch (14) in dem Kopf verlängert ist, der einen von dem Blindloch (14) durchquerten radialen Schlitz (30) aufweist, welcher auf der Außenseite mündet, um einen Schenkel (23) des Bügels (21) aufzunehmen, wobei der Schenkel (23) ein Loch (27) aufweist, das mit dem Blindloch des Kopfs (14) fluchtet.

2. Magnetventil nach Anspruch 1, **dadurch gekennzeichnet, dass** ein Zylinderkopfstück (13) in die Bohrung der Hülse (3) eingesetzt ist und das Loch (27) des Schenkels (23) des Bügels durchquert, um die Verriegelung dieses Schenkels in dem Körperteil (C1) zu gewährleisten.

3. Magnetventil nach Anspruch 1 oder 2, **dadurch gekennzeichnet, dass** der von dem Zylinderkopfstück (13) durchquerte Schenkel (23) des Bügels (21) fest mit der Basis (22) verbunden ist.

4. Magnetventil nach Anspruch 1, **dadurch gekennzeichnet, dass** das dem Kopf (2) gegenüberliegende Ende des ersten Körperteils (C1) einen Kragen (4) aufweist, dessen Durchmesser größer als derjenige der Hülse (3) ist, und dass die Spule (5) zwischen dem Kopf (2) und dem Kragen (4) um die Hülse (3) gewickelt ist.

5. Magnetventil nach einem der vorhergehenden Ansprüche, **dadurch gekennzeichnet, dass** die beiden Körperteile (C1, C2) aus gegossenem Kunststoff bestehen.

6. Magnetventil nach Anspruch 4, **dadurch gekennzeichnet, dass** der andere demontierbare Schenkel (22-23) des Bügels ein Loch (27) aufweist, in welches das Ende einer Verlängerung (3a) der Hülse eingesetzt ist, wobei das Loch durch einen zylindrischen Rand (29) begrenzt ist, der in eine kreisförmige Nut (6) des Kragens eingesetzt ist.

7. Magnetventil nach einem der vorhergehenden Ansprüche, **dadurch gekennzeichnet, dass** die einander zugewandten Enden des ersten und des zweiten Körperteils (C1, C2) Schnappeinrichtungen (35, 36; 37, 38) zum Zusammenhalten derselben aufweisen.

8. Magnetventil nach einem der vorhergehenden Ansprüche, **dadurch gekennzeichnet, dass** die Verbindungseinrichtungen (J1, J2) am Rand eines Teils (24) des Bügels eine Verzahnung (25) und am benachbarten Rand des anderen Teils (22) eine komplementäre Verzahnung (26) aufweisen, wobei die Verzahnungen beim Zusammenfügen der beiden Teile eng ineinander greifen können.

9. Magnetventil nach einem der vorhergehenden Ansprüche, **dadurch gekennzeichnet, dass** eines der demontierbaren Teile des Bügels (21) durch einen zu der Basis (22) des Bügels orthogonalen Schenkel (24) des U gebildet ist, wobei die Verzahnungen (25, 26) der beiden benachbarten Ränder in orthogonalen Ebenen angeordnet sind.

10. Magnetventil nach Anspruch 9, **dadurch gekennzeichnet, dass** das andere demontierbare Teil (22-23) des Bügels einstückig rechtwinklig ausgebildet ist.

11. Magnetventil nach Anspruch 8, **dadurch gekennzeichnet, dass** die Zähne der Verzahnungen (25, 26) rechteckig sind.
